# EUROPEAN PATENT SPECIFICATION

(11) **EP 2 432 056 B1**
(45) Date of publication and mention of the grant of the patent: **30.03.2016**
(21) Application number: 11181715.1
(22) Date of filing: 16.09.2011
(51) Int. Cl.: H01M 4/38, H01M 4/62, H01M 4/134, H01M 10/0525, C08F 8/14, C08F 8/44

(54) **Binder composition for rechargeable lithium battery, and electrode and rechargeable lithium battery including the same**
Bindemittelzusammensetzung für eine wiederaufladbare Lithiumbatterie sowie eine Elektrode und eine wiederaufladbare Lithiumbatterie damit
Composition de liant pour batterie rechargeable au lithium, électrode et batterie rechargeable au lithium la comprenant

(30) Priority: 17.09.2010 KR 20100092020
(43) Date of publication of application: 21.03.2012
(73) Proprietor: Samsung SDI Co., Ltd., Gyeonggi-do (KR)
(72) Inventor: Son, Dong-Ho, Gyeonggi-do (KR); Kim, Ki-Jun, Gyeonggi-do (KR); Kim, Ihn, Gyeonggi-do (KR); Cho, Chae-Woong, Gyeonggi-do (KR); Kim, Myoung-Sun, Gyeonggi-do (KR)
(74) Representative: Mounteney, Simon James

(56) References cited:
- EP-A1- 2 068 384
- EP-A1- 2 071 651
- JP-A- 2000 348 730

## Description

### BACKGROUND OF THE INVENTION

### Field of the Invention

This disclosure relates to a binder composition for a rechargeable lithium battery, and an electrode and a rechargeable lithium battery including the same.

### Description of the Related Art

Lithium rechargeable batteries have recently drawn attention as a power source for small portable electronic devices. They use an organic electrolyte solution and thereby, have twice or more the discharge voltage than a conventional battery using an alkali aqueous solution, and accordingly, have high energy density.

The rechargeable lithium battery is fabricated by injecting electrolyte into an electrode assembly, which includes a positive electrode including a positive active material capable of intercalating/deintercalating lithium ions and a negative electrode including a negative active material capable of intercalating/deintercalating lithium ions.

For fabricating an electrode, a binder is required to provide adherence of the active material. A binder is also required for improving the cycle-life characteristics of a battery and for the stability of the electrode along with the high adherence. EP2071651 discloses a binder composition comprising a polyacrylic acid and polyvinyl alcohol.

### SUMMARY OF THE INVENTION

One aspect of the present invention provides a binder composition for a rechargeable lithium battery being capable of improving the stability of an electrode and providing excellent cycle-life characteristics.

Another aspect of the present invention provides an electrode for a rechargeable lithium battery including the binder composition.

Yet another aspect of the present invention provides a rechargeable lithium battery including the binder composition.

The present invention provides a binder composition for a rechargeable lithium battery comprising a cross-linked composition of polyacrylic acid and polyvinyl alcohol, wherein the polyacrylic acid comprises one or more non-cross-linked acid groups that are substituted with an alkali metal cation or ammonium cation or combinations thereof, wherein the binder composition has a cross-linking ratio ranging from 20% to 70%.

According to another aspect of the present invention, an active material composition for a rechargeable lithium battery, comprising an active material and the binder composition of the present invention, is provided. The present invention also provides an electrode comprising the active material composition. In a preferred embodiment of the present invention, an electrode for a rechargeable lithium battery is provided that includes a current collector; and an active material layer disposed on the current collector, wherein the active material layer includes an active material and the binder composition of the present invention.

According to yet another aspect of the present invention, a rechargeable lithium battery including a positive electrode, a negative electrode, and an electrolyte is provided, wherein at least one of the positive electrode and the negative electrode comprise the binder of the present invention.

The cation preferably includes an alkali metal cation, preferably Li⁺, Na⁺, K⁺, or NH₄⁺, or a combination thereof.

The binder composition preferably has a pH of 4 to 14, more preferably 4 to 12, more preferably 6 to 8.

The binder composition of the present invention is preferably produced by a process comprising the step of dissolving polyacrylic acid, a hydroxide compound where the cation of the hydroxide compound is an alkali metal or ammonium cation, and polyvinyl alcohol in water to prepare an aqueous mixture. In a preferred embodiment of the present invention the binder composition is produced by a process comprising the steps of: dissolving polyacrylic acid in water; adding a hydroxide compound where the cation of the hydroxide compound is an alkali metal or ammonium cation to form a modified polyacrylic acid comprising one or more acid groups that are substituted with the alkali metal cation or ammonium cation; and adding polyvinyl alcohol to prepare an aqueous mixture.

In a preferred embodiment of the present invention the polyacrylic acid, the hydroxide compound and the polyvinyl alcohol are combined in the following weight percentages based on the combined weight of these components: polyacrylic acid -10% to 30%, more preferably 15% to 25%; hydroxide compound -1% to 15%, more preferably 2% to 10%; and polyvinyl alcohol -65% to 85%, more preferably 70% to 80%.

The electrode is preferably a negative electrode and the active material is preferably a negative active material. The negative active material preferably includes a Si-based compound such as Si, SiOₓ (0 < x < 2), Si-Q alloy (wherein Q is selected from an alkali metal, an alkaline-earth metal, a group 13 element, a group 14 element, a group 15 element, a group 16 element, a transition element, a rare earth element, or combinations thereof, and is not Si), a Si-C composite, or combinations thereof; a Sn-based compound such as Sn, SnO₂ a Sn-Q¹ alloy (wherein Q¹ is selected from an alkali metal, an alkaline-earth metal, a group 13 element, a group 14 element, a group 15 element, a group 16 element, a transition element, a rare earth element, or combinations thereof, and is not Sn), or combinations thereof.

The binder composition preferably has a cross-linking ratio of 20% to 60 %, more preferably 25% to 50%.

The binder composition preferably has a viscosity range from 1 Pa.s to 100 Pa.s.

Hereinafter, further embodiments will be described in detail.

When the binder composition according to one embodiment is used for a rechargeable lithium battery, it may improve the stability of an electrode and provide excellent cycle-life characteristics for a battery.

### BRIEF DESCRIPTION OF THE DRAWINGS

FIG. 1 is a schematic view of a rechargeable lithium battery according to one embodiment of the present invention.
FIG. 2 is an IR spectrum of binder compositions obtained from Examples 1 and 3 and Comparative Example 1.
FIG. 3 is a graph showing a cycle-life characteristic of each rechargeable lithium battery obtained from Examples 4 and 5 and Comparative Example 2.
FIG. 4 is a flow chart showing the preparation of a cross-linked compound according to one embodiment of the invention.
FIG. 5 shows the preparation of a cross-linked compound according an embodiment of the invention.

### DETAILED DESCRIPTION

Embodiments of the present invention will hereinafter be described in detail. However, the present invention is not limited thereto.

The binder composition for a rechargeable lithium battery includes a cross-linked composition of polyacrylic acid and polyvinyl alcohol, wherein the polyacrylic acid comprises one or more non-cross-linked acid groups that are substituted with an alkali metal or ammonium cation or combinations thereof, wherein the binder composition has a cross-linking ratio ranging from 20% to 70%.

The cross-linked compound of polyacrylic acid and polyvinyl alcohol is preferably obtained by heating polyacrylic acid and polyvinyl alcohol to effect a cross-linking reaction via esterification.

According to one embodiment, the cross-linking compound uses a modified polyacrylic acid. The modified polyacrylic acid has a structure where one or more hydroxyl groups of the polyacrylic acid are substituted with an alkali metal cation or ammonium.

The binder of the present invention provides a rechargeable lithium battery with excellent performance.

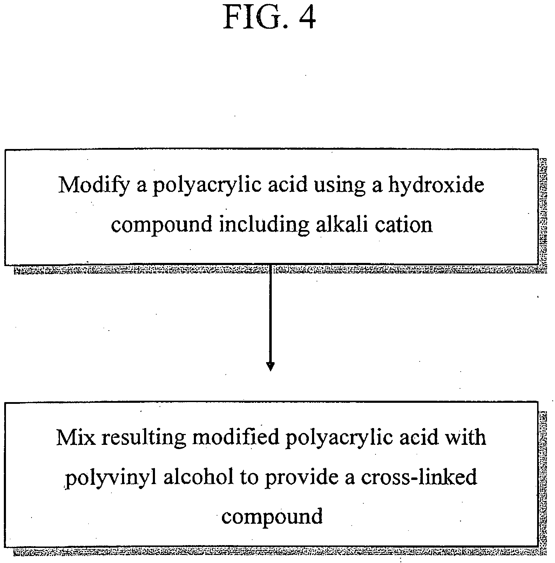

For example, the cross-linked compound according to the present invention may be obtained by the following two embodiments. According to the first embodiment, polyacrylic acid is modified using a hydroxide compound including an alkali metal cation or ammonium cation and the resulting modified polyacrylic acid mixed with polyvinyl alcohol to provide a cross-linked compound of polyacrylic acid, substituted with cation of the hydroxide compound, and polyvinyl alcohol, as shown in Fig. 4.

In an embodiment of the present invention the polyacrylic acid preferably has a weight-average molecular weight of 13000 to 23000. In another embodiment the polyacrylic acid preferably has a glass transition temperature (Tg) of 100°C to 112°C. Preferably, the polyacrylic acid has a molecular weight and a glass transition temperature within both the above ranges. In an embodiment of the present invention the polyvinyl alcohol preferably has weight-average molecular weight of 45000 ± (20,000 to 23,000), e.g. from 22000 to 68000, from 25000 to 65000. In another embodiment the polyvinyl alcohol preferably has a glass transition temperature (Tg) of 75°C to 85°C. Preferably, the polyvinyl alcohol has a molecular weight and a glass transition temperature within both the above ranges.

Preferably, the binder is prepared by a method comprising the steps of: dissolving polyacrylic acid in water; adding a hydroxide compound where the cation of the hydroxide compound is an alkali metal or ammonium to form a modified polyacrylic acid comprising one or more acid groups that are substituted with the alkali metal cation or ammonium cation; and adding polyvinyl alcohol to prepare an aqueous mixture.

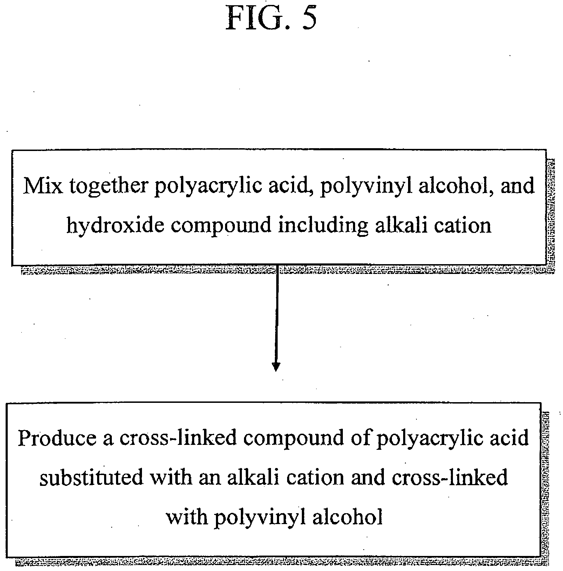

According to the second embodiment, polyacrylic acid, polyvinyl alcohol, and hydroxide compound including alkali cation are mixed together to provide a cross-linked compound of polyacrylic acid substituted with an alkali cation and polyvinyl alcohol, as shown in Fig. 5. Preferably, the binder is prepared by a method comprising the step of dissolving polyacrylic acid, a hydroxide compound where the cation of the hydroxide compound is an alkali metal or ammonium cation, and polyvinyl alcohol in water to prepare an aqueous mixture.

According to the first and second embodiments, polyacrylic acid is preferably used in the form of an aqueous solution. Preferably, the polyacrylic acid is present in a weight concentration of between 2% and 25% based on the weight of the polyacrylic acid and the water, more preferably between 5% and 15%. The polyacrylic acid exhibits acidic properties having pH 3.5 and low viscosity and is clear fluid when it is dissolved in water. The polyacrylic acid is believed to be present in the form of a coil in the aqueous solution. The hydroxide compound is added to the polyacrylic acid aqueous solution to increase pH, so that hydroxyl groups present in the polyacrylic acid are substituted with an alkali metal cation or ammonium cation. Thereby, it is believed that the polyacrylic acid present as a coil form becomes stretched out.

In this case, the pH of a binder composition is dependent upon the amount of hydroxide compound that is used.

The polyacrylic acid substituted with the above-mentioned cations has an increased ionization ratio over unmodified polyacrylic acid. Thereby, it more easily performs the cross-linking reaction with polyvinyl alcohol to provide a cross-linked compound, so that the cross-linking ratio is increased.

The cross-linked compound is preferably obtained by heating the mixed solution to be cross-linked. The heat treatment is preferably performed at a temperature of 150°C to 250°C, more preferably 160°C to 225°C, or more preferably, at 180°C to 200°C for 30 minutes to 180 minutes, preferably 45 minutes to 120 minutes, more preferably, for example, for 60 minutes to 90 minutes. When the heat treatment is performed within the above temperature and time ranges, a cross-linked compound with a high cross-linking ratio is provided.

In a preferred embodiment of the present invention the polyacrylic acid, the hydroxide compound and the polyvinyl alcohol are combined in the following weight percentages based on the combined weight of these components: polyacrylic acid - 10% to 30%, more preferably 15% to 25%; hydroxide compound - 1% to 15%, more preferably 2% to 10%; and polyvinyl alcohol -65% to 85%, more preferably 70% to 80%. Preferably, the components are combined in amounts of 15% to 25% polyacrylic acid, 2% to 10% hydroxide compound and 70% to 80% polyvinyl alcohol.

The cation preferably includes Li⁺, Na⁺, K⁺, NH₄⁺, or a combination thereof.

The polyacrylic acid substituted with the above-mentioned cations preferably has a substitution ratio of 100% or less, preferably 99% or less, for example, of 40% to 100%, preferably of 60% to 99%, more preferably 80% to 99%, more preferably 80% to 90%. When it has these substitution ratios, a cross-linked compound with a high cross-linking ratio is provided.

The binder composition preferably has a pH of 4 to 14, more preferably 4 to 12, more preferably 6 to 8. When the binder composition has pH within these ranges, the viscosity of a binder composition is increased to improve the phase stability, thereby the cycle-life characteristics of a rechargeable lithium battery are improved.

The viscosity of binder composition preferably is in the range from 1 to 100 Pa·s, preferably 3 to 20 Pa·s, more preferably 4 to 10 Pa·s, most preferably 5 to 8 Pa·s at a shearing rate of 1.0 s⁻¹. When the binder composition has the viscosity within the above ranges, the phase stability is improved, so that the cycle-life characteristics of a rechargeable lithium battery are improved.

The binder composition has a cross-linking ratio ranging from 20% to 70%, preferably 20% to 60%, preferably 20% to 40%. For example, such cross-linking may be obtained under the heating condition of 200°C and 60 minutes. The cross-linking ratio may be measured and calculated through acid-base titration, and the cross-linking may also be obtained by comparing the spectrum size to each functional group though IR analysis. When the cross-linking ratio is within the above ranges, the binding property of an electrode is increased, and the cycle-life characteristics of a rechargeable lithium battery are improved.

The binder composition optionally further includes a water-soluble binder such as polyvinyl alcohol, carboxylmethyl cellulose, hydroxypropyl cellulose, a polymer including ethylene oxide, and the like, besides the cross-linked compound of the present invention.

The binder composition may useful to prepare an electrode such as a positive electrode or a negative electrode. Preferably, the binder composition may used in order to prepare the negative electrode.

The present invention provides an active material composition for a rechargeable lithium battery, comprising an active material and the binder composition of the present invention. The active material composition of the present invention preferably contains between 1% and 30% by weight of the binder composition based on the total weight of the active material composition, more preferably between 5% and 15%. Preferably, the active material composition comprises between 65% and 95% by weight of the active material based on the total weight of the active material composition, more preferably between 75% and 85%. Optionally, the compositions further comprises between 1% and 30% by weight of a conductive material based on the total weight of the active material composition, preferably between 1% and 15%, between 1% and 10% and between 5% and 10% .

The present invention also provides an electrode for a rechargeable lithium battery. In a preferred embodiment of the present invention, an electrode for a rechargeable lithium battery is provided that includes a current collector; and an active material layer disposed on the current collector, wherein the active material layer includes an active material, and the binder composition of the present invention. In one embodiment of the present invention, the electrode may be fabricated by mixing an active material and the binder composition including a cross-linked composition of polyacrylic acid and polyvinyl alcohol, wherein the polyacrylic acid comprises one or more non-cross-linked acid groups that are substituted with an alkali metal cation or ammonium cation or combinations thereof, in a solvent to prepare an active material composition, and coating the active material composition on a current collector. Alternatively, the electrode may be fabricated by mixing an active material, the polyacrylic acid and polyvinyl alcohol, wherein the polyacrylic acid comprises one or more non-cross-linked acid groups that are substituted with an alkali metal cation or ammonium cation or combinations thereof, in a solvent to prepare an active material composition, coating the active material composition on a current collector, drying it, followed by heating it. During the heat-treatment, the cross-linkage of modified polyacrylic acid and polyvinyl occurs. Accordingly, in this embodiment, in the fabrication, polyacrylic acid, polyvinyl alcohol and hydroxide compound including alkali cation are used, instead of the modified polyacrylic acid. The heat treatment may be preferably performed at a temperature of 150°C to 250°C, more preferably 160°C to 225°C, or more preferably, at 180°C to 200°C. The heat treatment may be performed for 30 minutes to 180 minutes, preferably 45 minutes to 120 minutes, more preferably, for example, for 60 minutes to 90 minutes.

According to another embodiment, an electrode and rechargeable lithium battery including the binder composition of the present invention is provided.

Rechargeable lithium batteries may be classified into lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. Structures and fabrication methods for lithium ion batteries are well known in the art.

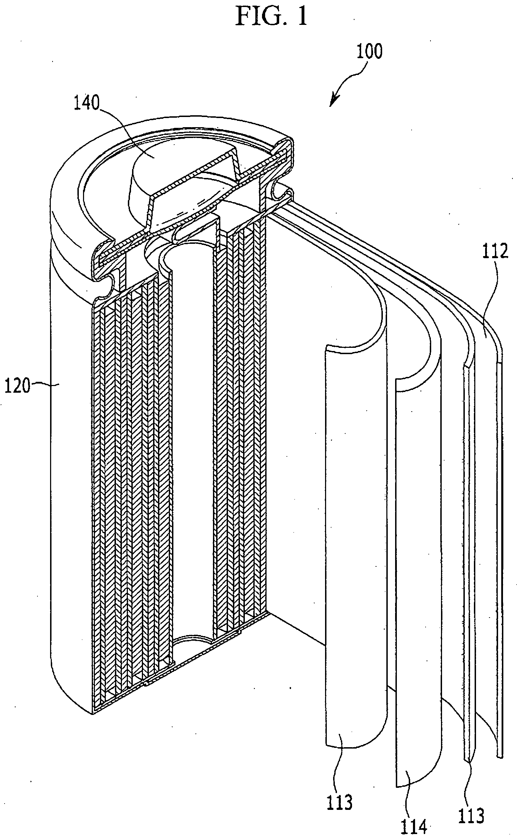

FIG. 1 is a schematic view of a rechargeable lithium battery according to one embodiment of the present invention. As shown in FIG. 1, the rechargeable lithium battery 100 may be formed with a cylindrical shape and includes a negative electrode 112, a positive electrode 114, a separator 113 disposed between the negative electrode 112 and the positive electrode 114, an electrolyte (not shown) impregnated in the negative electrode 112, the positive electrode 114 and the separator 113, a battery case 120, and sealing member 140 sealing the battery case 120. The rechargeable lithium battery 100 is fabricated by sequentially stacking a negative electrode 112, separator 113, and a positive electrode 114, and spiral-winding them and housing the wound product in the battery case 120.

The negative electrode includes a current collector and a negative active material layer disposed on the current collector. The negative active material layer includes a negative active material and binder.

The current collector is preferably selected from the group consisting of a copper film, a nickel film, a stainless steel film, a titanium film, a nickel foam, a copper foam, a polymer substrate coated with a conductive metal, and combinations thereof.

The negative active material is preferably selected from the group consisting of a material that may reversibly intercalate/deintercalate lithium ions (preferably a carbon material), a lithium metal, a lithium metal alloy, a material that may be doped and dedoped with lithium, a transition metal oxide, and combinations thereof.

The carbon material that may reversibly intercalate/deintercalate lithium ions preferably includes any carbon-based negative active material generally used in a lithium ion secondary battery, for example, crystalline carbon, amorphous carbon, or a combination thereof. The crystalline carbon preferably includes at least one of shapeless graphite, sheet-type graphite, flake-type graphite, spherical-shaped graphite or fiber-shaped natural graphite, artificial graphite, and mixtures thereof. The amorphous carbon preferably includes soft carbon or hard carbon, mesophase pitch carbide, fired cokes, or mixtures thereof.

The lithium metal alloy preferably includes lithium metal with a metal selected from the group consisting of Na, K, Rb, Cs, Fr, Be, Mg, Ca, Sr, Si, Sb, Pb, In, Zn, Ba, Ra, Ge, Al, and Sn.

The material doped and dedoped with lithium preferably includes a Si-based compound such as Si, SiOₓ (0 < x < 2), Si-Q alloy (wherein Q is selected from an alkali metal, an alkaline-earth metal, a group 13 element, a group 14 element, a group 15 element, a group 16 element, a transition element, a rare earth element, or combinations thereof, and is not Si), a Si-C composite, or combinations thereof; a Sn-based compound such as Sn, SnO₂, a Sn-Q¹ alloy (wherein Q¹ is selected from an alkali metal, an alkaline-earth metal, a group 13 element, a group 14 element, a group 15 element, a group 16 element, a transition element, a rare earth element, or combinations thereof, and is not Sn), or combinations thereof. The elements Q and Q¹ may be independently selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The transition metal oxide is preferably vanadium oxide, lithium vanadium oxide, and the like.

When the Si-based compound or the Sn-based compound is used as a negative active material, the binder composition according to the present invention improves the cycle-life characteristics of a rechargeable lithium battery by reducing the deterioration due to the repeated expansion and shrinkage of the negative active material during the charge and discharge.

The negative active material layer preferably includes a conductive material.

The conductive material is included to improve electrode conductivity. Any electrically conductive material may be used as a conductive material unless it causes a chemical change. Examples of the conductive material include natural graphite, artificial graphite, carbon black, acetylene black, ketjen black, carbon fiber, a metal powder or a metal fiber including copper, nickel, aluminium, silver, and polyphenylene derivatives.

The positive electrode 114 includes a current collector and a positive active material layer disposed on the current collector. The positive active material layer includes a positive active material and a binder.

The current collector is preferably aluminium (Al) but is not limited thereto.

The positive active material includes a lithiated intercalation compound that reversibly intercalates and deintercalates lithium ions. The positive active material preferably includes a composite oxide including at least one selected from the group consisting of cobalt, manganese, and nickel, as well as lithium. In particular, the following lithium-containing compounds are preferably used.

LiₐAₗ-_{b}R_{b}D₂ (0.90≤ a≤ 1.8, 0≤ b≤ 0.5); LiₐE_{1-b}R_{b}O_{2-c}D_{c} (0.90≤ a≤ 1.8, 0 ≤ b ≤ 0.5, and 0≤ c≤ 0.05); LiₐE_{2-b}R_{b}O_{4-c}D_{c} (0.90≤ a≤ 1.8, 0≤ b≤ 0.5 and 0≤ c≤ 0.05); LiₐNi_{1-b-c}Co_{b}R_{c}D_{α} (0.90≤ a ≤1.8, 0≤ b≤ 0.5, 0≤ c≤ 0.05, and 0 < α ≤ 2); LiₐNi_{1-b-c}Co_{b}R_{c}O_{2-α}Z_{α} (0.90≤ a≤ 1.8, 0≤ b≤ 0.5, 0≤ c≤ 0.05, and 0 < α < 2); LiₐNi_{1-b-c}Co_{b}R_{c}O_{2-α}Z₂ (0.90≤ a≤ 1.8, 0≤ b≤ 0.5, 0≤ c≤ 0.05, and 0 < α < 2); LiₐNi_{1-b-c}Mn_{b}R_{c}D_{α} (0.90≤ a≤ 1.8, 0≤ b ≤ 0.5, 0≤ c≤ 0.05, and 0 < α≤ 2); LiₐNi_{1-b-c}Vln_{b}R_{c}O_{2-α}Z_{α} (0.90≤ a≤ 1.8, 0≤ b≤ 0.5, 0≤ c≤ 0.05, and 0 < α < 2); LiₐNi_{1-b-c}Mn_{b}R_{c}O_{2-α}Z₂ (0.90≤a≤ 1.8, 0≤b≤ 0.5, 0≤ c≤ 0.05, and 0 < α < 2); LiₐNi_{b}E_{c}G_{d}O₂ (0.90≤ α≤ 1.8, 0 ≤ b≤ 0.9, 0≤ c≤ 0.5, and 0.001≤ d≤ 0.1); LiₐNi_{b}Co_{c}Mn_{d}GₑO₂ (0.90≤ a≤ 1.8, 0≤ b≤ 0.9, 0≤ c≤ 0.5, 0≤ d≤0.5, and 0.001≤ e≤ 0.1); LiₐNiG_{b}O₂ (0.90≤ a≤ 1.8, and 0.001≤ b≤ 0.1); LiₐCoG_{b}O₂ (0.90≤ a≤ 1.8 and 0.001≤ b≤ 0.1); LiₐMnG_{b}O₂ (0.90≤ a≤ 1.8 and 0.001≤ b≤ 0.1); LiₐMn₂G_{b}O₄ (0.90≤ a≤ 1.8 and 0.001≤ b≤ 0.1); QO₂; QS₂; LiQS₂; V₂O₅; LiV₂O₅; LiZO₂; LiNiVO₄; Li(_{3-f})J₂(PO₄)₃ (0≤ f≤ 2); Li_{(3-f)}Fe₂(PO₄)₃ (0≤ f ≤2); and LiFePO₄.

In the above formulae, A is selected from Ni, Co, Mn, and a combination thereof; R is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; Z is selected from F, S, P, and a combination thereof; G is selected from Al, Cr, Mn, Fe, Mg, La, Ce, Sr, V, and a combination thereof; Q is selected from Ti, Mo, Mn, and a combination thereof; and J is selected from V, Cr, Mn, Co, Ni, Cu, and a combination thereof.

The compound optionally has a coating layer on the surface, or is optionally mixed with another compound having a coating layer. The coating layer preferably includes at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer preferably includes Mg, Al, Co, K, Na, Ca, Si, Ti, V, Sn, Ge, Ga, B, As, Zr, or mixtures thereof. The coating layer may be disposed in a method having no adverse influence on properties of a positive active material by using these elements in the compound. For example, the method may include any coating method such as spray coating, dipping, and the like, but is not illustrated in more detail since it is well-known to those who work in the field.

If an electrode is present that does not contain the binder of the present invention, the binder used is preferably selected from the group including polyvinylidene fluoride (PVDF), polyimide, polyamideimide, polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyethylene, polypropylene, a styrene-butadiene rubber, an acrylated styrene-butadiene rubber, an epoxy resin, nylon, and the like, but are not limited thereto.

The positive active material layer preferably selectively includes conductive material.

The conductive material is included to improve electrode conductivity. Any electrically conductive material may be used as a conductive material unless it causes a chemical change. Examples of the conductive material include one or more of natural graphite, artificial graphite, carbon black, acetylene black, ketjen black, carbon fiber, a metal powder or a metal fiber including copper, nickel, aluminium, silver, and polyphenylene derivatives.

The negative 112 and positive electrodes 114 may optionally be fabricated by a method including mixing the active material, a conductive material, and a binder in a solvent, into an active material composition and coating the composition on a current collector. The electrode manufacturing method is well known, and thus is not described in detail in the present specification. The solvent for the positive electrode may be N-methylpyrrolidone, but it is not limited thereto. The solvent for the negative electrode may be water, but is not limited thereto.

The electrolyte includes a lithium salt and a non-aqueous organic solvent.

The lithium salt is dissolved in an organic solvent and plays a role of supplying lithium ions in a battery, operating a basic operation of the rechargeable lithium battery, and improving lithium ion transportation between positive and negative electrodes therein.

Non-limiting examples of the lithium salt include LiPF₆, LiBF₄, LiSbF₆, LiAsF₆, LiN(SO₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, LiI, and LiB(C₂O₄)₂ (lithium bis(oxalato) borate; LiBOB). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The non-aqueous organic solvent serves as a medium for transmitting ions taking part in the electrochemical reaction of a battery.

The non-aqueous organic solvent preferably includes a carbonate-based, ester-based, ether-based, ketone-based, alcohol-based, or aprotic solvent.

Examples of the carbonate-based solvent preferably includes dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), or the like.

When the carbonate-based solvent is prepared by mixing a cyclic carbonate and a chain carbonate, a solvent having a low viscosity while having an increased dielectric constant may be provided. The cyclic carbonate and the chain carbonate are mixed together in a volume ratio of 1:1 to 1:9.

Examples of the ester-based solvent preferably include methyl acetate, ethyl acetate, n-propyl acetate, dimethylacetate, methylpropionate, ethylpropionate, γ-butyrolactone, decanolide, valerolactone, mevalonolactone, caprolactone, or the like. Examples of the ether-based solvent include dibutyl ether, tetraglyme, diglyme, dimethoxyethane, 2-methyltetrahydrofuran, tetrahydrofuran, or the like, and examples of the ketone-based solvent include cyclohexanone, or the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, or the like.

The non-aqueous organic solvent may be used singularly or in a mixture. When the organic solvent is used in a mixture, the mixture ratio may be controlled in accordance with a desirable battery performance.

The non-aqueous electrolyte optionally further includes an overcharge-inhibiting additive such as ethylenecarbonate, pyrocarbonate, and the like.

Non-limiting examples of the separator 113 include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

Hereinafter, the embodiments are illustrated in more detail with reference to examples. However, the following are merely embodiments of the present invention and are not limiting.

Furthermore, what is not described in this specification can be sufficiently understood by those who have knowledge in this field and will not be illustrated here.

### <Preparation of binder composition>

### Example 1

18 wt% of a polyacrylic acid aqueous solution (10 wt% concentration), 8 wt% of NaOH, and 74 wt% of polyvinyl alcohol are mixed and heated at 200°C for 60 minutes to provide a binder composition of cross-linked compound of Na⁺-substftuted polyacrylic acid and polyvinyl alcohol. The substitution ratio was about 90%.

### Example 2

20 wt% of a polyacrylic acid aqueous solution with a concentration of 10 wt%, 4 wt% ofNaOH, and 76 wt% of polyvinyl alcohol are mixed and heated at 200°C for 60 minutes to provide a binder composition of cross-linking compound of Na⁺-substituted polyacrylic acid and polyvinyl alcohol. The substitution ratio was about 50%.

### Example 3

18 wt% of a polyacrylic acid aqueous solution with a concentration of 10 wt%, 10 wt% of NaOH, and 72 wt% of polyvinyl alcohol are mixed and heated at 200°C for 60 minutes to provide a binder composition of cross-linking compound of Na⁺-substituted polyacrylic acid and polyvinyl alcohol. The substitution ratio was about 100%.

### Comparative Example 1

20 wt% of a polyacrylic acid aqueous solution with a concentration of 10 wt%, and 80 wt% of polyvinyl alcohol are mixed and heated at 200°C for 60 minutes to provide a binder composition of cross-linking compound of polyacrylic acid and polyvinyl alcohol.

### Evaluation 1-1: pH measurement of binder composition

Each binder composition obtained from Examples 1 to 3 and Comparative Example 1 is measured for pH using a pH meter, and the results are shown in the following Table 1.

### Evaluation 1-2: Cross-linking ratio measurement of binder composition

Each binder composition obtained from Examples 1 to 3 and Comparative Example 1 is measured and calculated for a cross-linking ratio through an acid-base titration, and the results are shown in the following Table 1.

### Evaluation 1-3: Viscosity measurement of binder composition

Each binder composition obtained from Examples 1 to 3 and Comparative Example 1 is measured for viscosity using a rheometer, and the results are shown in the following Table 1.

**Table 1**

| | Examples | | | Comparative Example 1 |
|---|---|---|---|---|
| | 1 | 2 | 3 | |
| pH | 6.3 | 4.8 | 11.9 | 3.4 |
| Cross-linking ratio (%) | 44 | 28 | 46 | 18 |
| Viscosity (Pa·s) | 5.78 | 4.50 | 10.23 | 2.42 |

As shown in Table 1, it is confirmed that Examples 1 to 3 including the cross-linking compounds of polyacrylic acid, substituted with an alkali metal cation, and polyvinyl alcohol have higher pH, cross-linking ratio, and viscosity compared to Comparative Example 1 including the cross-linking composition polyacrylic acid, which is not substituted with alkali metal cation, and polyvinyl alcohol.

In addition, it is confirmed that the viscosity is also increased along with increasing pH in Examples 1 to 3.

### Evaluation 1-4: IR data of binder composition

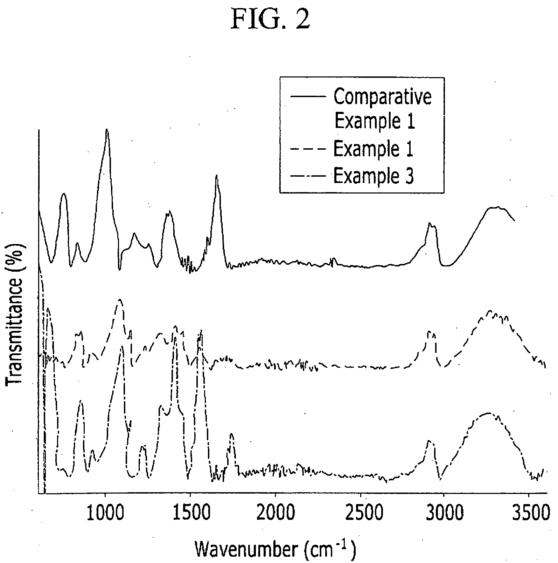

FIG. 2 shows an IR spectrum of binder compositions obtained from Examples 1 and 3 and Comparative Example 1.

Referring to FIG. 2, it is understood that Comparative Example 1 including a cross-linked compound of polyacrylic acid which is not substituted with alkali cation and polyvinyl alcohol shows a peak from carboxyl group of polyacrylic acid at around 1710 cm⁻¹, on the other hand, Examples 1 and 3 including the cross-linked compound of polyacrylic acid substituted with an alkali cation and polyvinyl alcohol according to one embodiment does not show the peak, or the peak is shifted to around 1600 cm⁻¹. From the results, it is understood that each binder composition obtained from Examples 1 and 3 is cross-linked.

### <Fabrication of rechargeable lithium battery cell>

### Example 4

80 wt% of a negative active material of a Si/SiO₂/carbon composite, 10 wt% of binder of a binder composition, and 10 wt% of conductive material of carbon black are mixed and dispersed in water to provide a composition for a negative active material layer. The binder composition was prepared by mixing polyacrylic acid aqueous solution (10 wt% concentration), NaOH, and polyvinyl alcohol at a weight ratio of 18: 8 : 74 weight ratio.

Subsequently, the composition for a negative active material layer is coated on a Cu-foil current collector, dried and then heat-treated at 200°C for 60 minutes to provide a negative electrode.

As a counter electrode of the negative electrode, lithium metal is used to provide a coin-type half-cell. An electrolyte is prepared by dissolving 1.3 M of LiPF₆ in a mixed solution of ethylene carbonate (EC) and dimethyl carbonate (DMC) in a volume ratio of 3:7.

### Example 5

A coin-type half-cell was fabricated by the same procedure as in Example 4, except that a mixture of polyacrylic acid aqueous solution (10 wt% concentration), NaOH, and polyvinyl alcohol at a weight ratio of 20 : 4 : 76 weight ratio was used as the binder composition.

### Example 6

A coin-type half-cell was fabricated by the same procedure as in Example 4, except that a mixture of polyacrylic acid aqueous solution (10 wt% concentration), NaOH, and polyvinyl alcohol at a weight ratio of 18 : 10 : 72 weight ratio was used as the binder composition.

### Comparative Example 2

A coin-type half-cell was fabricated by the same procedure as in Example 4, except that a mixture of polyacrylic acid aqueous solution (10 wt% concentration) and polyvinyl alcohol at a weight ratio of 20 : 80 weight ratio was used as the binder composition.

### Evaluation 2: Assessment of cycle-life characteristic of rechargeable lithium

### battery cell

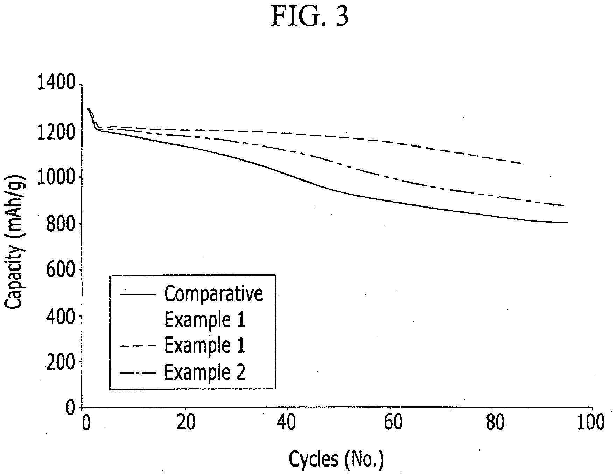

Each rechargeable lithium battery obtained from Examples 4 to 6 and Comparative Example 2 is assessed for a cycle-life characteristic, and the results are shown in FIG. 3.

It is charged under the condition of constant current/ constant voltage (CC/CV) mode of 0.02C, 0.2C, 0.5C, and cut off of 0.01C, respectively and discharged under the condition of constant current mode of 0.02C, 0.2C, 0.5C, and cut off 1.4V, respectively.

FIG. 3 is a graph showing a cycle-life characteristic of each rechargeable lithium battery obtained from Examples 4 and 5 and Comparative Example 2.

Referring to FIG. 3, it is confirmed that Examples 4 and 5 including a cross-linked compound of polyacrylic acid substituted with an alkali cation and polyvinyl alcohol have superior cycle-life characteristics to Comparative Example 2 including a cross-linking compound of polyacrylic acid which is not substituted with an alkali cation and polyvinyl alcohol.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A binder composition for a rechargeable lithium battery, comprising:
a cross-linked composition of polyacrylic acid and polyvinyl alcohol, wherein the polyacrylic acid comprises one or more non-cross-linked acid groups that are substituted with an alkali metal cation or ammonium cation or combinations thereof, **characterized in that** the binder composition has a cross-linking ratio ranging from 20% to 70%.

2. The binder composition for a rechargeable lithium battery of claim 1, wherein the cation is selected from the group consisting of Li⁺, Na⁺, K⁺, NH₄⁺, or combinations thereof.

3. The binder composition for a rechargeable lithium battery of claim 1 or claim 2, wherein the binder composition has pH of 4 to 14, more preferably 4 to 12, more preferably 6 to 8.

4. The binder composition for a rechargeable lithium battery of any of claims 1 to 3, wherein the binder composition has cross-linking ratio of 20% to 60%, more preferably 25% to 50%.

5. The binder composition for a rechargeable lithium battery of any of claims 1 to 4, wherein the binder composition has a viscosity range from 1 to 100 Pa·s, preferably about 3 to 50 Pa·s, more preferably 4 to 20 Pa·s.

6. A process for preparing the composition of any of claims 1 to 5 comprising the step of dissolving polyacrylic acid, a hydroxide compound where the cation of the hydroxide compound is an alkali metal or ammonium cation, and polyvinyl alcohol in water to prepare an aqueous mixture.

7. The process of claim 6 further comprising the steps of:
dissolving polyacrylic acid in water;
adding the hydroxide compound to form a modified polyacrylic acid comprising one or more acid groups that are substituted with the alkali metal cation or ammonium cation; and
adding polyvinyl alcohol to prepare an aqueous mixture.

8. The process of either of claims 6 or 7 further comprising the step of heating the aqueous mixture at a temperature of 150°C to 250°C, preferably 160°C to 225°C, more preferably 180°C to 200°C and for a time period of 30 minutes to 180 minutes, preferably 45 minutes to 120 minutes, more preferably 60 minutes to 90 minutes.

9. The process of any of claims 6 to 8, wherein the polyacrylic acid, hydroxide compound and polyvinyl alcohol are combined in the following weight percentages based on the combined weight of these components:
polyacrylic acid -10% to 30%, more preferably 15% to 25%;
hydroxide compound -1% to 15%, more preferably 2% to 10%; and
polyvinyl alcohol -65% to 85%, more preferably 70% to 80%.

10. The process of any of claims 6 to 9, wherein the polyacrylic acid is present in a weight concentration of between 2% and 25% based on the weight of the polyacrylic acid and the water, more preferably between 5% and 15%.

11. An active material composition for a rechargeable lithium battery, comprising:
an active material and a binder composition as claimed in any of claims 1 to 5.

12. The active material composition of claim 11, wherein the active material is a negative active material.

13. The active material composition of claim 12, wherein the negative active material comprises:
a Si-based compound selected from Si, SiOₓ (0 < x < 2), a Si-Q alloy (wherein Q is selected from an alkali metal, an alkaline-earth metal, a group 13 element, a group 14 element, a group 15 element, a group 16 element, a transition element, a rare earth element, or combinations thereof, and is not Si), a Si-C composite, or combinations thereof;
a Sn-based compound selected from Sn, SnO₂, a Sn-Q¹ alloy (wherein Q¹ is selected from an alkali metal, an alkaline-earth metal, a group 13 element, a group 14 element, a group 15 element, a group 16 element, a transition element, a rare earth element, or combinations thereof, and is not Sn), or combinations thereof.

14. An electrode comprising the active material composition of any of claims 11 to 13.

15. A rechargeable lithium battery comprising
a positive electrode;
a negative electrode; and
an electrolyte,
wherein at least one of the positive electrode and the negative electrode is as claimed in claim 14.

## Patentansprüche

1. Bindemittelzusammensetzung für eine wiederaufladbare Lithiumbatterie, umfassend:
eine vernetzte Zusammensetzung von Polyacrylsäure und Polyvinylalkohol, wobei die Polyacrylsäure eine oder mehrere unvernetzte Säuregruppen umfasst, die mit einem Alkalimetallkation oder Ammoniumkation oder Kombinationen davon substituiert sind, **dadurch gekennzeichnet, dass** die Bindemittelzusammensetzung einen von 20 % bis 70 % reichenden Vernetzungsanteil aufweist.

2. Bindemittelzusammensetzung für eine wiederaufladbare Lithiumbatterie nach Anspruch 1, wobei das Kation ausgewählt ist aus der Gruppe bestehend aus Li⁺, Na⁺, K⁺, NH₄⁺, oder Kombinationen davon.

3. Bindemittelzusammensetzung für eine wiederaufladbare Lithiumbatterie nach Anspruch 1 oder Anspruch 2, wobei die Bindemittelzusammensetzung einen pH-Wert von 4 bis 14, stärker bevorzugt 4 bis 12, stärker bevorzugt 6 bis 8 hat.

4. Bindemittelzusammensetzung für eine wiederaufladbare Lithiumbatterie nach einem der Ansprüche 1 bis 3, wobei die Bindemittelzusammensetzung einen Vernetzungsanteil von 20 % bis 60 %, stärker bevorzugt 25 % bis 50 % aufweist.

5. Bindemittelzusammensetzung für eine wiederaufladbare Lithiumbatterie nach einem der Ansprüche 1 bis 4, wobei die Bindemittelzusammensetzung einen Viskositätsbereich von 1 bis 100 Pa·s, bevorzugt etwa 3 bis 50Pa·s, stärker bevorzugt 4 bis 20 Pa·s aufweist.

6. Verfahren zur Herstellung der Zusammensetzung nach einem der Ansprüche 1 bis 5, umfassend den Schritt des Lösens von Polyacrylsäure, einer Hydroxidverbindung, wobei das Kation der Hydroxidverbindung ein Alkalimetall- oder Ammoniumkation ist, und Polyvinylalkohol in Wasser, um ein wässriges Gemisch herzustellen.

7. Verfahren nach Anspruch 6, weiterhin umfassend die folgenden Schritte:
Lösen von Polyacrylsäure in Wasser;
Hinzugeben der Hydroxidverbindung zur Bildung einer modifizierten Polyacrylsäure, umfassend eine oder mehrere Säuregruppen, die mit dem Alkalimetallkation oder Ammoniumkation substituiert sind; und
Hinzugeben von Polyvinylalkohol, um ein wässriges Gemisch herzustellen.

8. Verfahren nach einem der Ansprüche 6 oder 7, weiterhin umfassend den Schritt des Erhitzens des wässrigen Gemisches bei einer Temperatur von 150 °C bis 250 °C, bevorzugt 160 °C bis 225 °C, stärker bevorzugt 180 °C bis 200 °C und über eine Zeitspanne von 30 Minuten bis 180 Minuten, bevorzugt 45 Minuten bis 120 Minuten, stärker bevorzugt 60 Minuten bis 90 Minuten.

9. Verfahren nach einem der Ansprüche 6 bis 8, wobei Polyacrylsäure, Hydroxidverbindung und Polyvinylalkohol in den folgenden prozentualen Gewichtsanteilen, bezogen auf das gemeinsame Gewicht dieser Komponenten, kombiniert werden:
Polyacrylsäure -10 % bis 30 %, stärker bevorzugt 15 % bis 25 %;
Hydroxidverbindung -1 % bis 15 %, stärker bevorzugt 2 % to 10 %; und
Polyvinylalkohol -65 % bis 85 %, stärker bevorzugt 70 % bis 80 %.

10. Verfahren nach einem der Ansprüche 6 bis 9, wobei die Polyacrylsäure in einer Gewichtskonzentration von zwischen 2 % und 25 %, bezogen auf das Gewicht der Polyacrylsäure und des Wassers, stärker bevorzugt zwischen 5 % and 15 %, vorliegt.

11. Aktivmaterialzusammensetzung für eine wiederaufladbare Lithiumbatterie, umfassend:
ein Aktivmaterial und eine Bindemittelzusammensetzung nach einem der Ansprüche 1 bis 5.

12. Aktivmaterialzusammensetzung nach Anspruch 11, wobei das Aktivmaterial ein Negativ-Aktivmaterial ist.

13. Aktivmaterialzusammensetzung nach Anspruch 12, wobei das Negativ-Aktivmaterial umfasst:
eine Verbindung auf Si-Basis, ausgewählt aus Si, SiOₓ (0 < x < 2), einer Si-Q-Legierung (wobei Q ausgewählt ist aus einem Alkalimetall, einem Erdalkalimetall, einem Element der Gruppe 13, einem Element der Gruppe 14, einem Element der Gruppe 15, einem Element der Gruppe 16, einem Übergangsmetall, einem Seltenerdmetall, oder Kombinationen davon, und nicht Si ist), einem Si-C-Verbundwerkstoff, oder Kombinationen davon;
eine Verbindung auf Sn-Basis, ausgewählt aus Sn, SnO₂, einer Sn-Q¹-Legierung (wobei Q¹ ausgewählt ist aus einem Alkalimetall, einem Erdalkalimetall, einem Element der Gruppe 13, einem Element der Gruppe 14, einem Element der Gruppe 15, einem Element der Gruppe 16, einem Übergangsmetall, einem Seltenerdmetall, oder Kombinationen davon, und nicht Sn ist), oder Kombinationen davon.

14. Elektrode, umfassend die Aktivmaterialzusammensetzung nach einem der Ansprüche 11 bis 13.

15. Wiederaufladbare Lithiumbatterie, umfassend
eine positive Elektrode;
eine negative Elektrode; und
einen Elektrolyt,
wobei mindestens eine von der positiven Elektrode und der negativen Elektrode ist, wie in Anspruch 14 beansprucht.

## Revendications

1. Composition de liant pour une batterie au lithium rechargeable, comprenant:
une composition réticulée d'acide polyacrylique et d'alcool polyvinylique, dans laquelle l'acide polyacrylique comprend un ou plusieurs groupes acide non réticulés qui sont substitués avec un cation de métal alcalin ou un cation ammonium ou bien leurs associations, ladite composition de liant étant **caractérisée en ce qu'**elle a un rapport de réticulation allant de 20 % à 70 %.

2. Composition de liant pour une batterie au lithium rechargeable suivant la revendication 1, dans laquelle le cation est choisi dans le groupe consistant en Li⁺, Na⁺, K⁺, NH₄⁺ et leurs associations.

3. Composition de liant pour une batterie au lithium rechargeable suivant la revendication 1 ou la revendication 2, ladite composition de liant ayant un pH de 4 à 14, plus avantageusement de 4 à 12, plus avantageusement de 6 à 8.

4. Composition de liant pour une batterie au lithium rechargeable suivant l'une quelconque des revendications 1 à 3, ladite composition de liant ayant un rapport de réticulation de 20 % à 60 %, plus avantageusement de 25 % à 50 %.

5. Composition de liant pour une batterie au lithium rechargeable suivant l'une quelconque des revendications 1 à 4, ladite composition de liant ayant une plage de viscosité de 1 à 100 Pa.s, avantageusement d'environ 3 à 50 Pa.s, plus avantageusement de 4 à 20 Pa.s.

6. Procédé pour préparer la composition de l'une quelconque des revendications 1 à 5, comprenant l'étape de dissolution d'acide polyacrylique, d'un hydroxyde dont le cation est un cation de métal alcalin ou cation ammonium, et d'alcool polyvinylique dans de l'eau pour préparer un mélange aqueux.

7. Procédé suivant la revendication 6, comprenant en outre les étapes:
de dissolution d'acide polyacrylique dans de l'eau ;
d'addition de l'hydroxyde pour former un acide polyacrylique modifié comprenant un ou plusieurs groupes acide qui sont substitués avec le cation de métal alcalin ou le cation ammonium; et
d'addition de l'alcool polyvinylique pour préparer un mélange aqueux.

8. Procédé suivant la revendication 6 ou 7, comprenant en outre l'étape de chauffage du mélange aqueux à une température de 150°C à 250°C, avantageusement de 160°C à 225°C, plus avantageusement de 180°C à 200°C et pendant une période de temps de 30 minutes à 180 minutes, avantageusement de 45 minutes à 120 minutes, plus avantageusement de 60 minutes à 90 minutes.

9. Procédé suivant l'une quelconque des revendications à 6 à 8, dans lequel l'acide polyacrylique, l'hydroxyde et l'alcool polyvinylique sont combinés en les pourcentages pondéraux suivants sur la base du poids total de ces constituants:
acide polyacrylique -10 % à 30 %, plus avantageusement 15 % à 25 % ;
hydroxyde - 1 % à 15 %, plus avantageusement 2 % à 10 % ; et
alcool polyvinylique -65 % à 85 %, plus avantageusement 70 % à 80 %.

10. Procédé suivant l'une quelconque des revendications à 6 à 9, dans lequel l'acide polyacrylique est présent à une concentration pondérale entre 2 % et 25 % sur la base du poids de l'acide polyacrylique et de l'eau, plus avantageusement entre 5 % et 15 %.

11. Composition de matière active pour une batterie au lithium rechargeable, comprenant:
une matière active et une composition de liant suivant l'une quelconque des revendications 1 à 5.

12. Composition de matière active suivant la revendication 11, dans laquelle la matière active est une matière active négative

13. Composition de matière active suivant la revendication 12, dans laquelle la matière active négative comprend:
un composé à base de Si choisi entre Si, SiOₓ (0 < x < 2), un alliage Si-Q (dans lequel Q est choisi entre un métal alcalin, un métal alcalinoterreux, un élément du Groupe 13, un élément du Groupe 14, un élément du Groupe 15, un élément du Groupe 16, un élément de transition, un élément faisant partie des terres rares et leurs associations, et ne représente pas Si), un composite Si-C, et leurs associations;
un composé à base de Sn choisi entre Sn, SnO₂, un alliage Sn-Q¹ (dans lequel Q¹ est choisi entre un métal alcalin, un métal alcalinoterreux, un élément du Groupe 13, un élément du Groupe 14, un élément du Groupe 15, un élément du Groupe 16, un élément de transition, un élément faisant partie des terres rares, et leurs associations, et ne représente pas Sn) et leurs associations.

14. Electrode comprenant la composition de matière active de l'une quelconque des revendications 11 à 13.

15. Batterie au lithium rechargeable comprenant:
une électrode positive ;
une électrode négative; et
un électrolyte,
dans laquelle au moins une de l'électrode positive et de l'électrode négative est une électrode suivant la revendication 14.
